# FASCICULE DE BREVET EUROPEEN

(11) **EP 3 619 815 B1**
(45) Date de publication et mention de la délivrance du brevet: **21.07.2021**
(21) Numéro de dépôt: 17727632.6
(22) Date de dépôt: 05.05.2017
(51) Int. Cl.: H04B 1/04

(54) **PROCÉDÉ DE CONTRÔLE DE L'ADAPTATION D'UNE ANTENNE À UN CHEMIN DE TRANSMISSION, ET DISPOSITIF CORRESPONDANT**
VERFAHREN ZUR STEUERUNG DER ABSTIMMUNG EINER ANTENNE AUF EINEN ÜBERTRAGUNGSWEG UND ENTSPRECHENDE VORRICHTUNG
METHOD FOR CONTROLLING THE MATCHING OF AN ANTENNA TO A TRANSMISSION PATH, AND CORRESPONDING DEVICE

(43) Date de publication de la demande: 11.03.2020
(73) Titulaire: STMicroelectronics SA, 92120 Montrouge (FR)
(72) Inventeur: KNOPIK, Vincent, 38830 Saint Pierre D'Allevard (FR); MORET, Boris, 33127 Saint Jean D'Illac (FR); KERHERVE, Eric, 33600 Pessac (FR)
(74) Mandataire: Casalonga
(86) Numéro de dépôt international: PCT/FR2017/051088
(87) Numéro de publication internationale: WO 2018/202958

(56) Documents cités:
- WO-A1-2016/111897
- CN-A- 102 110 238
- FR-A1- 3 010 263

## Description

Des modes de mise en œuvre et de réalisation de l'invention concernent les dispositifs électroniques dédiés aux transmissions d'information, en particulier pour les applications radiofréquences (« radio frequency » : RF en anglais), et plus particulièrement les circuits « frontaux » (« Front End » circuits en anglais) de ces dispositifs électroniques RF, en particulier ceux dédiés à l'adaptation d'une antenne à un chemin de transmission.

D'une façon générale, le circuit frontal d'un tel dispositif électronique RF comporte au moins un amplificateur couplé en sortie ou en entrée à une antenne pour respectivement émettre ou recevoir un signal RF.

En émission le ou les amplificateurs couplés en sortie à l'antenne sont typiquement des amplificateurs de puissance.

En réception le ou les amplificateurs couplés en entrée à l'antenne sont typiquement des amplificateurs faible bruit (LNA : « Low Noise Amplifier »).

Si par exemple l'on se place du côté émission, chaque amplificateur de puissance dudit dispositif électronique RF reçoit à son entrée, un signal d'entrée avec une petite amplitude et puis délivre dans un cas idéal, à sa sortie vers l'antenne, un signal de sortie qui est une image amplifiée du signal d'entrée.

Afin de permettre un transfert maximal de puissance entre le chemin de transmission et l'antenne, il est souhaitable d'assurer une adaptation de l'antenne à l'amplificateur au niveau de leur impédance respective. En d'autres termes, il est souhaitable que l'impédance de l'antenne soit égale à l'impédance optimale à présenter en sortie de l'amplificateur pour éviter des réflexions.

A cet égard, un rapport d'onde stationnaire (ROS), communément connu de l'homme du métier sous l'acronyme anglosaxon « SWR » (« Standing Wave Ratio »), ou plus précisément « VSWR » (« Voltage Standing Wave Ratio » : VSWR en anglais), est généralement utilisé pour apprécier la qualité de l'adaptation de l'antenne à l'amplificateur.

Lorsque les impédances de l'antenne et de l'amplificateur sont adaptées, toute la puissance du signal de sortie est délivrée à l'antenne. Il n'y a donc pas de réflexion d'onde et le rapport d'onde stationnaire de tension ROS vaut 1, soit la valeur minimale.

Lorsque le rapport ROS devient supérieur à 1, cela signifie que les impédances de l'antenne et de l'amplificateur ne sont plus adaptées. Par conséquent, il y a une onde réfléchie de l'antenne vers l'amplificateur.

Cette désadaptation d'impédances provoque par conséquent une diminution sur la puissance électrique délivrée à l'antenne et une dégradation sur les performances de l'amplificateur de puissance. En outre, cette onde réfléchie pourra influencer négativement la fiabilité de l'amplificateur.

Des circuits classiques pour détecter des niveaux de réflexion d'onde et de rapport d'onde stationnaire de tension ROS entre une antenne et un amplificateur de puissance nécessite une implémentation directe entre l'antenne et l'amplificateur en combinaison avec des circuits de correction pour modifier l'impédance de l'amplificateur de façon à adapter à un éventuel changement de l'impédance de l'antenne. Cette implémentation présente de façon incontournable des pertes d'insertion à la sortie de l'amplificateur, ce qui réduit la performance de l'amplificateur de puissance.

Les inconvénients qui viennent d'être décrits pour un amplificateur d'une chaîne d'émission peuvent se transposer pour un amplificateur d'une chaîne de réception.

WO2016111897 décrit un circuit sans contact ayant une ou plusieurs antennes couplées à un transducteur RF par une ligne de transmission. L'antenne incorpore un circuit accordable d'adaptation d'impédance. Des capteurs de température peuvent être utilisés pour mesurer la température de fonctionnement de l'antenne et peuvent être utilisés pour ajuster le fonctionnement de l'antenne, par exemple le circuit accordable d'adaptation d'impédance.

Il existe ainsi un besoin de proposer une solution technique à faible complexité permettant de détecter le niveau d'adaptation d'impédance entre l'amplificateur et l'antenne, que ce soit en émission et/ou en réception, via notamment le rapport ROS, sans y introduire des pertes d'insertion et de réadapter l'impédance de la sortie de l'amplificateur à celle de l'antenne lorsqu'il y a eu une variation d'impédance sur cette dernière.

Selon un aspect, il est proposé un procédé de contrôle de l'adaptation d'une antenne à un chemin de transmission. Le chemin de transmission comporte un étage amplificateur couplé en entrée ou en sortie à l'antenne et à une charge résistive. Le procédé comprend
une phase de contrôle comportant une mesure d'une première température courante au niveau ou à proximité de l'antenne et d'une deuxième température courante au niveau ou à proximité de la charge résistive,
un déclenchement d'une adaptation de l'impédance vue en entrée ou en sortie de l'étage amplificateur en présence d'une première condition faisant intervenir au moins les première et deuxième températures, et puis
un arrêt de l'adaptation de l'impédance en présence d'une deuxième condition faisant intervenir au moins la deuxième température.

Il convient de noter qu'un tel procédé totalement symétrique peut être appliqué sur un chemin de transmission pour émettre un signal RF à une antenne ainsi que sur un chemin de transmission pour recevoir un signal RF via une antenne. La sortie de l'étage amplificateur est couplée à l'antenne en émission tandis que l'entrée de l'étage amplificateur est couplée à l'antenne en réception.

Lorsque les impédances de l'entrée ou de la sortie de l'étage amplificateur et de l'antenne sont adaptées, le rapport ROS vaut 1 et il n'y a donc pas de réflexions d'onde.

La charge résistive est configurée pour recevoir toutes les réflexions d'ondes s'il y en a. Sans réflexion d'onde, la première température courante au niveau de l'antenne est par conséquent plus élevée que la deuxième température courante au niveau de la charge résistive.

Dans le cas où la première condition est remplie, il y a une variation sur l'impédance de l'antenne et la désadaptation de l'impédance de l'antenne conduit au rapport ROS supérieur à 1. Il y a réflexion d'onde vers la charge résistive, ce qui conduit à une augmentation de la deuxième température.

Autrement dit, on peut détecter la désadaptation d'impédance entre l'étage amplificateur et l'antenne en mesurant des variations des première et deuxième températures.

Lorsque la deuxième condition est remplie, la deuxième température revient à sa valeur initiale. On peut ainsi en conclure que l'adaptation d'impédance entre l'étage amplificateur et l'antenne est rétablie.

Comme on le verra plus en détails ci-après, un tel procédé ne nécessite avantageusement aucune implémentation directe (invasive) de circuit entre l'étage amplificateur et l'antenne.

De ce fait, les pertes d'insertion introduites entre l'étage amplificateur et l'antenne pour détecter et contrôler l'adaptation de l'antenne à l'étage amplificateur sont avantageusement minimales voire nulles.

Le procédé peut par exemple comprend en outre
une phase d'étalonnage préalable à la phase de contrôle et comporte un remplacement au sein du chemin de transmission, de l'antenne par une impédance de référence et un placement de l'étage amplificateur dans un état de fonctionnement,
une définition de températures de référence de chemin contenue dans une plage de températures de référence de chemin, et
pour chaque température de référence de chemin, une mesure d'une première température de référence au niveau de l'impédance de référence et une mesure d'une deuxième température de référence au niveau de la charge résistive.

Il convient de noter que l'impédance de référence est avantageusement adaptée à l'impédance de l'étage amplificateur pour qu'on puisse mesurer les première et deuxième températures de référence pour chaque température de référence de chemin lorsqu'il n'y a pas de réflexion d'onde.

Selon un mode de mise en œuvre, la phase de contrôle comprend
une mesure d'une température courante de chemin du chemin de transmission,
une première comparaison entre la deuxième température courante et la deuxième température de référence associée à une température de référence de chemin correspondant à ladite température courante de chemin, et
une deuxième comparaison entre la première température courante et la première température de référence associée à une température de référence de chemin correspondant à ladite température courante de chemin.

La première condition est remplie
si la première température courante est inférieure ou égale à la première température de référence augmentée d'un premier seuil, et
si la deuxième température courante est supérieure à la deuxième température de référence augmentée d'un deuxième seuil.

Selon un autre mode de mise en œuvre, la phase de contrôle comprend
une première mesure d'une première température courante de chemin du chemin transmission,
une première comparaison entre la deuxième température courante et la deuxième température de référence associée à une température de référence de chemin correspondant à ladite première température courante de chemin,
une deuxième comparaison entre la première température courante et la première température de référence associée à une température de référence de chemin correspondant à ladite première température courante de chemin,
une deuxième mesure, à l'issue de la deuxième comparaison, d'une deuxième température courante de chemin du chemin de transmission, et
une troisième comparaison entre les première et deuxième températures courantes de chemin.

La première condition est remplie
si la première température courante est supérieure à la première température de référence augmentée d'un premier seuil, et
si la deuxième température courante est supérieure à la deuxième température de référence augmentée d'un deuxième seuil, et
si la deuxième température courante de chemin est inférieure ou égale à la première température courante de chemin.

Selon encore un mode de mise en œuvre, la phase de contrôle comprend
une première mesure d'une première température courante de chemin du chemin de transmission,
une première comparaison entre la deuxième température courante et la deuxième température de référence associée à une température de référence de chemin correspondant à ladite première température courante de chemin,
une deuxième comparaison entre la première température courante et la première température de référence associée à une température de référence de chemin correspondant à ladite première température courante de chemin,
une deuxième mesure, à l'issue de la deuxième comparaison, d'une deuxième température courante de chemin du chemin de transmission,
une troisième comparaison entre les première et deuxième températures courantes de chemin, et
une quatrième comparaison, à l'issue de la troisième comparaison, entre une différence courante entre les première et deuxième températures courantes et une différence de référence entre la première température de référence augmentée d'un premier seuil et la deuxième température de référence augmentée d'un deuxième seuil.

La première condition est remplie
si la première température courante est supérieure à la première température de référence augmentée d'un premier seuil, et
si la deuxième température courante est supérieure à la deuxième température de référence augmentée d'un deuxième seuil, et
si la deuxième température courante de chemin est supérieure à la première température courante de chemin, et
si la différence courante est inférieure ou égale à la différence de référence.

A titre d'exemple non limitatif, la deuxième condition peut être remplie
si la deuxième température courante est supérieure à la deuxième température de référence augmentée du deuxième seuil, et
si la première température courante est supérieure à la première température de référence augmentée du premier seuil, et
si la deuxième température courante de chemin est supérieure à la première température courante de chemin, et
si la différence courante est supérieure à la différence de référence.

La deuxième condition peut également être remplie
si la deuxième température courante est inférieure ou égale à la deuxième température de référence augmentée du deuxième seuil.

A titre indicatif non limitatif, les premier et deuxième seuils sont égaux.

Selon un autre aspect, il est proposé un dispositif électronique. Le dispositif comprend une antenne, et un chemin de transmission.

Le chemin de transmission comporte
un étage amplificateur couplé en entrée ou en sortie à l'antenne et à une charge résistive,
un premier capteur de température disposé à proximité de l'antenne et configuré pour mesurer une première température courante,
un deuxième capteur de température disposé à proximité de la charge résistive et configuré pour mesure une deuxième température courante.

Le dispositif comprend en outre des moyens de traitement configurés pour déclencher une adaptation de l'impédance vue en entrée ou en sortie de l'étage amplificateur en présence d'une première condition faisant intervenir au moins les première et deuxième températures courantes puis pour arrêter l'adaptation de l'impédance en présence d'une deuxième condition faisant intervenir au moins la deuxième température courante.

Le fait que les premier et deuxième capteurs soient disposés respectivement à proximité de l'antenne et de la charge résistive mais pas directement entre l'étage amplificateur et l'antenne permet avantageusement d'éviter des pertes d'insertion de façon à améliorer la performance du dispositif électronique.

Le dispositif peut par exemple comprendre en outre des moyens de mémoire configurés pour stocker des températures de référence de chemin contenues dans une plage de températures de référence de chemin et pour chaque température de référence de chemin, une première température de référence mesurée au niveau d'une impédance de référence à la place de l'antenne et une deuxième température de référence mesurée au niveau de la charge résistive, avec un étage amplificateur en état de fonctionnement.

Selon un mode de réalisation, le dispositif comprend en outre un troisième capteur de température configuré pour effectuer une première mesure d'une première température courante de chemin du chemin de transmission.

Les moyens de traitement comportent des moyens de comparaison configurés pour effectuer une première comparaison entre la deuxième température courante et la deuxième température de référence associée à une température de référence de chemin correspondant à la première température courante de chemin, et une deuxième comparaison entre la première température courante et la première température de référence associée à ladite température de référence de chemin.

La première condition est remplie
si la première température courante est inférieure ou égale à la première température de référence augmentée d'un premier seuil, et
si la deuxième température courante est supérieure à la deuxième température de référence augmentée d'un deuxième seuil.

Selon un autre mode de réalisation, le dispositif comprend en outre un troisième capteur de température apte à mesurer une température courante de chemin du chemin de transmission et configuré pour effectuer une première mesure d'une première température courante de chemin du chemin de transmission.

Les moyens de traitement comportent des moyens de comparaison configuré pour effectuer une première comparaison entre la deuxième température courante et la deuxième température de référence associée à une température de référence de chemin correspondant à la première température courante de chemin, et une deuxième comparaison entre la première température courante et la première température de référence associée à ladite température de référence de chemin.

Le troisième capteur est en outre configuré pour effectuer une deuxième mesure, à l'issue de la deuxième comparaison, d'une deuxième température courante de chemin du chemin de transmission.

Les moyens de traitement sont en outre configurés pour effectuer une troisième comparaison entre les première et deuxième températures courantes de chemin.

La première condition est remplie
si la première température courante est supérieure à la première température de référence augmentée d'un premier seuil, et
si la deuxième température courante est supérieure à la deuxième température de référence augmentée d'un deuxième seuil, et
si la deuxième température courante de la ligne est inférieure ou égale à la première température courante de chemin.

Selon encore un autre mode de réalisation, le dispositif comprend en outre un troisième capteur de température apte à mesurer une température courante de chemin du chemin de transmission et configuré pour effectuer une première mesure d'une première température courante de chemin du chemin de transmission.

Les moyens de traitement comportent des moyens de comparaison configuré pour effectuer une première comparaison entre la deuxième température courante et la deuxième température de référence associée à une température de référence de chemin correspondant à la première température courante de chemin, et une deuxième comparaison entre la première température courante et la première température de référence associée à ladite température de référence de chemin.

Le troisième capteur est en outre configuré pour effectuer une deuxième mesure, à l'issue de la deuxième comparaison, d'une deuxième température courante de chemin du chemin de transmission.

Les moyens de comparaison sont en outre configurés pour effectuer une troisième comparaison entre les première et deuxième températures courantes de chemin, et une quatrième comparaison, à l'issue de la troisième comparaison, entre une différence courante entre les première et deuxième températures courante et une différence de référence entre la première température de référence augmentée d'un premier seuil et la deuxième température de référence augmentée d'un deuxième seuil.

La première condition est remplie
si la première température courante est supérieure à la première température de référence augmentée du premier seuil, et
si la deuxième température courante est supérieure à la deuxième température de référence augmentée du deuxième seuil, et
si la deuxième température courante de chemin est supérieure à la première température courante de chemin, et
si la différence courante est inférieure ou égale à la différence de référence.

A titre indicatif mais non limitatif, la deuxième condition peut être remplie
si la première température courante est supérieure à la première température de référence augmentée du premier seuil, et
si la deuxième température courante est supérieure à la deuxième température de référence augmentée du deuxième seuil, et
si la deuxième température courante de chemin est supérieure à la première température courante de chemin, et
si la différence courante est supérieure à la différence de référence.

La deuxième condition peut également être remplie
si la deuxième température courante est inférieure ou égale à la deuxième température de référence augmentée du deuxième seuil.

Les premier et deuxième seuils peuvent par exemple être identiques.

A titre d'exemple non limitatif, le dispositif comprend en outre
une premier étage de couplage comportant un diviseur de puissance 90° et
un deuxième étage de couplage comportant un combineur de puissance 90° dont les première et deuxième bornes d'entrée ou de sortie sont respectivement couplées à l'antenne et à la charge résistive.

L'étage amplificateur comporte deux amplificateurs de puissance équilibrés couplés en parallèle entre les premier et deuxième étages de couplage.

Un tel combineur de puissance 90° permet de diriger toutes les réflexions d'onde vers la charge résistive de façon à protéger avantageusement les deux amplificateurs de puissance équilibrés contre les réflexions d'onde.

Selon un mode de réalisation, les moyens de traitement comprennent
des moyens de contrôle couplés entre la sortie des moyens de comparaison, et l'entrée ou la sortie de l'étage amplificateur et les entrées et les sorties du deuxième étage de couplage, et configurés pour contrôler l'impédance vue en entrée ou en sortie de l'étage amplificateur en fonction du résultat des première, deuxième, troisième et quatrième comparaisons.

A titre d'exemple non limitatif, la distance entre les première et deuxième bornes d'entrée ou de sortie du deuxième étage de couplage est supérieure à 100 µm.

Le dispositif peut par exemple être réalisé de façon intégrée.

Selon encore un autre aspect, il est proposé un appareil de communication sans fil incorporant au moins un dispositif tel que défini ci-avant.

D'autres avantages et caractéristiques de l'invention apparaîtront à l'examen de la description détaillée de modes de mise en œuvre et de réalisation, nullement limitatifs, et des dessins annexés sur lesquels :

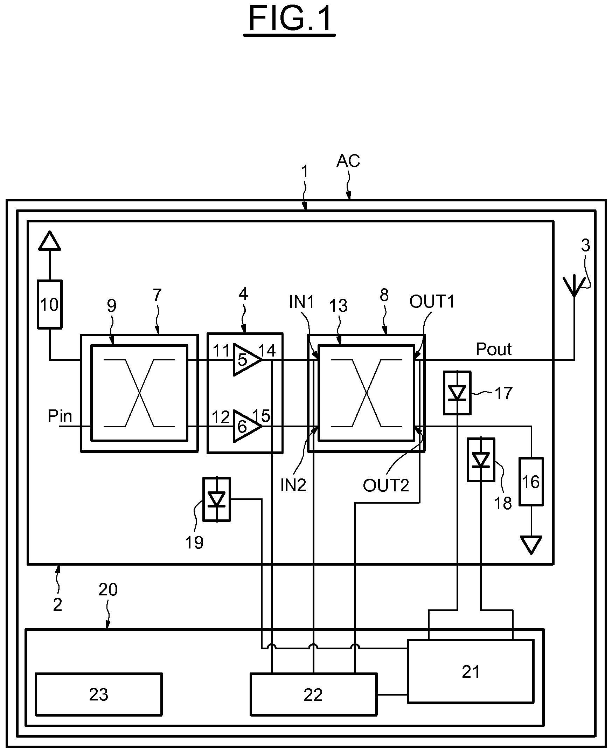

- les figures 1 à 4 illustrent schématiquement des modes de mise en œuvre et de réalisation de l'invention.

La référence AC illustrée sur la figure 1 représente un appareil de communication sans fil, ici par exemple un téléphone portable cellulaire comportant au moins un dispositif électronique 1, ici par exemple un dispositif 1 radiofréquence millimétrique réalisé de façon intégré.

Le dispositif 1 peut comporter un ou plusieurs chemins de transmission 2 couplés chacun à une antenne 3. A des fins de simplification, la figure 1 illustre ici un exemple d'un seul chemin de transmission 2 couplée à l'antenne 3. Ce chemin de transmission 2 peut être configuré pour émettre un signal RF ou recevoir un signal RF via l'antenne 3. A des fins de simplification et de clarté, on considère ci-après seulement le cas d'un chemin de transmission pour l'émission de signal RF.

Le chemin de transmission 2 comprend un étage amplificateur 4 comportant un premier et un deuxième amplificateur 5 et 6 équilibrés identiques couplés en parallèle entre un premier étage de couplage 7 et un deuxième étage de couplage 8.

Le premier étage de couplage 7 comprend un premier coupleur en quadrature hybride, ici par exemple un diviseur de puissance 90° référencé 9 dont une première entrée est couplée à une résistance 10, dont une deuxième entrée est destinée à recevoir un signal d'entrée de puissance Pin, dont une première sortie est couplée à l'entrée 11 du premier amplificateur 5, et dont une deuxième sortie est couplée à l'entrée 12 du deuxième amplificateur 6.

Dans un cas idéal, la puissance du signal d'entrée Pin est distribuée également, via le diviseur de puissance 9, entre les première et deuxième sorties du diviseur de puissance 9, avec un déphasage de 90° entre ces première et deuxième sorties. Aucune puissance n'est transmise à la résistance 10.

Le deuxième étage de couplage 8 comprend un deuxième coupleur en quadrature hybride, ici par exemple un combineur de puissance 90° référencé 13 dont une première borne d'entrée IN1 est couplée à la sortie 14 du premier amplificateur 5, dont une deuxième borne d'entrée IN2 est couplée à la sortie 15 du deuxième amplificateur 6, dont une première borne de sortie OUT1 est couplée à l'antenne 3 et dont une deuxième borne de sortie OUT2 est couplée à une charge résistive 16.

Comme les premier et deuxième amplificateurs 5 et 6 sont identiques, on obtient ainsi aux sorties 14 et 15 des premier et deuxième amplificateurs 5 et 6, les signaux Pin/2 amplifiés, avec un déphasage de 90° entre ces sorties.

Dans un cas idéal, la puissance transmise Pout à l'antenne 3 est égale à la combinaison des puissances des signaux de sortie des amplificateurs 5 et 6, sans déphasage par rapport au signal d'entrée Pin. Par analogie, aucune puissance n'est transmise à la charge résistive 16.

Le chemin de transmission 2 comprend en outre un premier capteur de température 17 disposé dans ou à proximité de l'antenne 3, un deuxième capteur de température 18 disposé au niveau ou à proximité de la charge résistive 16, et un troisième capteur de température 19 disposé dans ou à proximité du chemin de transmission 2, ici par exemple à côté de l'étage amplificateur 4. Les premier, deuxième et troisième capteurs de température 17 à 19 comportent chacun par exemple de façon classique et connue en soi un montage de transistor monté en diode, une diode ou tout autre dispositif permettant une détection et une mesure de température.

Afin d'éviter des influences mutuelles entre les premier et deuxième capteurs de température 17 et 18, il est préférable de garder une distance entre les première et deuxième sorties du deuxième étage de couplage 8, au moins égale à 100 µm, de préférence de l'ordre de 200 µm.

Le dispositif 1 comprend en outre des moyens de traitement 20 couplés aux premier, deuxième et troisième capteurs de température 17 à 19, et configurés pour déclencher une adaptation de l'impédance vue en sortie de l'étage amplificateur 4 en présence d'une première condition C1 faisant intervenir au moins les première et deuxième températures mesurées respectivement par les premier et deuxième capteurs 17 et 18 puis pour arrêter l'adaptation de l'impédance en présence d'une deuxième condition C2 faisant intervenir au moins la deuxième température.

Les moyens de traitement 20 comprennent des moyens de comparaison 21 couplés respectivement aux premier, deuxième et troisième capteurs de température 17 à 19. Les moyens 20 comprennent également des moyens de contrôle 22 couplés aux moyens de comparaison 21, aux sorties 14 et 15 des premier et deuxième amplificateurs 5 et 6, et au combineur de puissance 13.

Comme on l'a expliqué ci-avant, lorsque l'impédance de l'antenne 3 et l'impédance vue en sortie de l'étage amplificateur 4 sont adaptées, aucune puissance n'est transmise vers la charge résistive 16. En d'autres termes, la température au niveau de la charge résistive 16 est normalement moins élevée que celle au niveau de l'antenne 3.

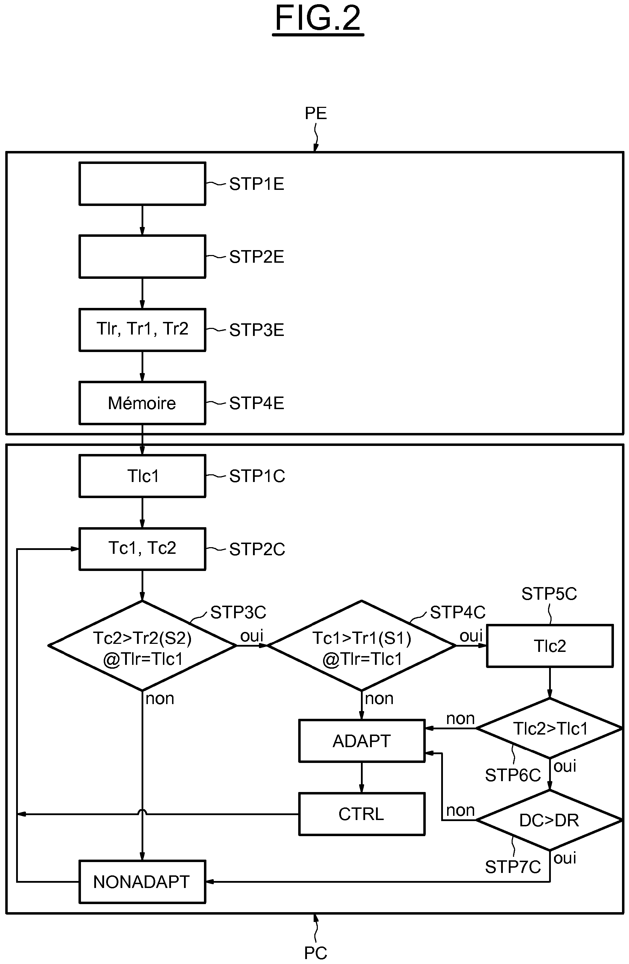

On se réfère maintenant à la figure 2 pour illustrer un exemple du procédé de contrôle de l'adaptation de l'antenne 3 au chemin de transmission 2 selon un mode de mise en œuvre.

Afin d'étalonner des températures de référence en prenant en compte la température du chemin de transmission 2, il convient de prévoir une phase d'étalonnage PE préalablement à une phase de contrôle PC de l'adaptation de l'antenne 3 au chemin de transmission 2.

Dans la phase d'étalonnage PE, le chemin de transmission 2 est couplé, à la place de l'antenne 3, à une impédance de référence (non illustrée) adaptée à l'impédance vue en sortie de l'étage amplificateur 4 (STP1E).

Le dispositif 1 est ensuite placé, dans une étape suivante (STP2E), dans un état de fonctionnement.

On définit une série de températures de référence de chemin Tlr contenues dans une plage de températures de référence de chemin, par exemple tous les deux degrés entre -40° à 80°.

Pour chaque température de référence de chemin Tlr telle que définie ci-dessus, les capteurs 17 et 18 sont configurés pour effectuer une mesure d'une première température de référence Tr1 au niveau ou à proximité de l'impédance de référence et une mesure d'une deuxième température de référence Tr2 au niveau ou à proximité de la charge résistive 16 (STP3E).

Les moyens de traitement 20 comprennent en outre une mémoire 23 (figure 1) configurée pour mémoriser chaque température de référence de chemin Tlr et les première et deuxième températures de référence Tr1 et Tr2 correspondantes (STP4E).

Il convient de noter que dans la phase d'étalonnage PE, la deuxième température de référence Tr2 est toujours moins élevée que la première température de référence Tr1.

Dans la phase de contrôle PC, le chemin de transmission 2 est couplé à l'antenne 3 et les moyens de traitement 20 sont configurés pour détecter une variation de l'impédance de l'antenne 3 (NONADAPT) si la première condition est remplie ou simplement une adaptation de l'antenne 3 (ADAPT) au chemin de transmission 2 lorsque la deuxième condition est remplie.

Lorsque la première condition est remplie, les moyens de contrôle 22 sont configurés pour modifier, dans une étape de contrôle CTRL, l'impédance vue en sortie de l'étage amplificateur 4 de façon à réadapter l'impédance de l'antenne 3.

Et l'adaptation d'impédance va être effectuée tant que la deuxième condition n'est pas remplie.

Quand la deuxième condition est remplie, l'adaptation d'impédance s'arrête. Bien entendu si la deuxième condition est remplie avant la première, l'adaptation d'impédance n'est pas déclencher tant que la première condition n'est pas remplie.

Pour ce faire, le troisième capteur 19 est configuré pour mesurer, dans une première étape STP1C, une première température courante de chemin Tlc1 tandis que les premier et deuxième capteurs 17 et 18 sont configurés pour respectivement mesurer, dans une deuxième étape STP2C, une première température courante Tc1 et une deuxième température courante Tc2.

On détermine alors la température de référence de chemin Tlr mémorisée qui est égale à ou proche de la première température courante de chemin Tlc1, et on peut en déduire les première et deuxième températures de référence Tr1 et Tr2 correspondantes mémorisées.

Puis, les moyens de comparaison 21 sont configurés pour effectuer une première comparaison (STP3C) entre la deuxième température courante Tc2 et la deuxième température de référence Tr2 augmentée d'un deuxième seuil S2.

Ce deuxième seuil S2 est configuré ici pour ajuster la sensibilité du procédé de contrôle. La valeur du deuxième seuil S2 est une valeur relative et peut par exemple être 10% à 30% de la deuxième température de référence Tr2.

Lorsque la deuxième température courante Tc2 est inférieure ou égale à la deuxième température de référence Tr2 augmentée du deuxième seuil S2, la deuxième condition est remplie et l'on revient à la deuxième étape STP2C.

Dans le cas contraire, les moyens de comparaison 21 sont configurés pour effectuer une deuxième comparaison (STP4C) entre la première température courante Tc1 et la première température de référence Tr1 augmentée d'un premier seuil S1.

Les premier et deuxième seuils S1 et S2 peuvent être identiques ou différents. A titre d'exemple, on peut avoir le premier seuil S1 égal au deuxième seuil S2.

La première condition est remplie si la première température courante Tc1 est inférieure ou égale à la première température de référence Tr1 augmentée du premier seuil S1.

En effet, la différence DC entre les première et deuxième températures courantes Tc1 et Tc2 est plus faible que la différence DR entre la première température de référence Tr1 augmentée du premier seuil S1 et la deuxième température de référence Tr2 augmentée du deuxième seuil S2, ce qui signifie qu'il y a de la puissance transmise vers la charge résistive 16 augmentant alors la deuxième température courante Tc2. En conclusion, il existe une variation sur l'impédance de l'antenne 3 et l'impédance de l'antenne 3 et celle vue en sortie de l'étage amplificateur 4 ne sont plus adaptées.

Dans le cas où la première température courante Tc1 est supérieure à la première température de référence Tl1, il faut en plus vérifier l'influence de la température d'ambiance courante sur le procédé de contrôle.

A cet égard, le troisième capteur de température 19 est configuré pour mesurer une deuxième température courante de chemin Tlc2 (STP5C) et puis les moyens de comparaison 21 sont en outre configurés pour effectuer une troisième comparaison (STP6C) entre les première et deuxième températures courantes de chemin Tlcl et Tlc2.

Lorsque la deuxième température courante de chemin Tlc2 est inférieure ou égale à la première température courante de chemin Tlc1, la première condition est également remplie et on peut considérer qu'une adaptation de l'antenne 3 au chemin de transmission 2 est nécessaire.

Sinon, les moyens de comparaison 21 sont en outre configurés pour effectuer une quatrième comparaison (STP7C) entre la différence DC entre les première et deuxième températures courantes Tc1 et Tc2 et la différence DR entre la première température de référence Tr1 augmentée du premier seuil et la deuxième température de référence Tr2 augmentée du deuxième seuil.

Lorsque la différence DC est inférieure ou égale à la différence DR, la première condition est remplie.

Sinon, il n'y a pas de variation détectée sur l'impédance de l'antenne 3. La deuxième condition est par conséquent remplie et l'on revient à la deuxième étape STP2C.

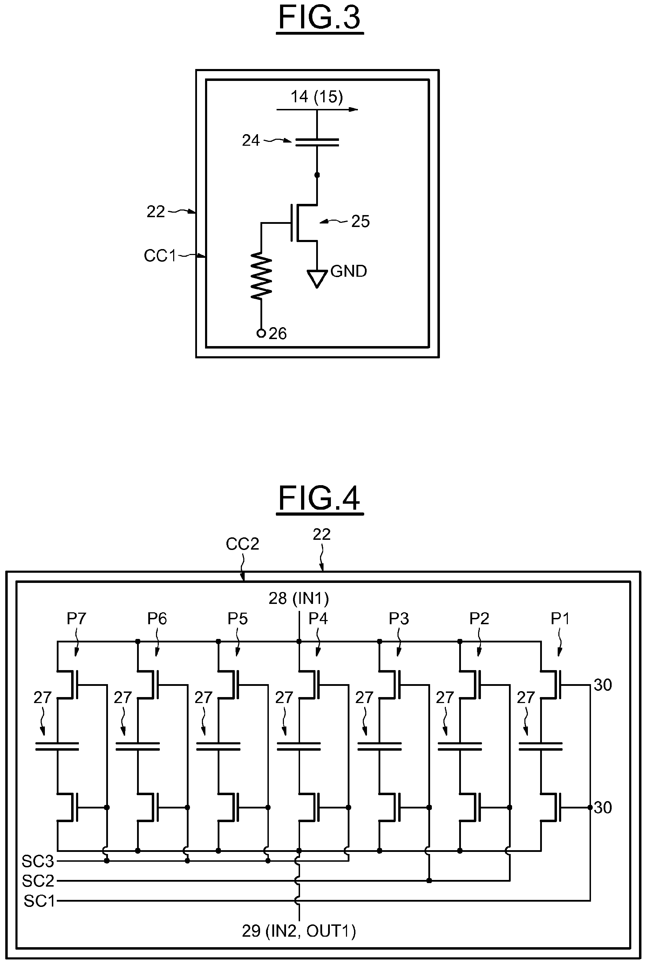

On se réfère maintenant aux figures 3 et 4 pour illustrer plus en détails des exemples des moyens de contrôle 22.

Afin de modifier l'impédance vue en sortie de l'étage amplificateur 4, les moyens de contrôle 22 peuvent être couplés aux sorties 14 et 15 des premier et deuxième amplificateurs 5 et 6.

En variante, les moyens de contrôle 22 peuvent également couplés aux première et deuxième entrées IN1 et IN2 du combineur de puissance 13 voire à ses première et deuxième sorties OUT1 et OUT2.

La figure 3 illustre un exemple d'un circuit de contrôle CC1 incorporé dans les moyens de contrôle 22. Un condensateur 24 est couplé entre une quelconque des sorties 14 et 15 des premier et deuxième amplificateurs 5 et 6 et le drain d'un transistor de contrôle 25. La grille du transistor de contrôle 25 est contrôlée par une tension de contrôle 26 et la source du transistor de contrôle 25 est couplée à la masse GND.

Par conséquent le fonctionnement du condensateur 24 et du transistor de contrôle 25 sont contrôlés par la tension de contrôle 26 qui est délivrée par les moyens de comparaison 21. Lorsque la tension de contrôle 26 est à l'état haut (ce qui correspond à la satisfaction de la première condition), le transistor de contrôle 25 est passant et le condensateur 24 est couplé à la masse GND de façon à apporter un changement sur l'impédance vue en sortie de l'étage amplificateur 4.

Lorsque la tension de contrôle est à l'état bas (ce qui correspond à la satisfaction de la deuxième condition), le transistor est bloqué et le condensateur n'apporte aucune modification sur l'impédance vue en sortie de l'étage amplificateur 4.

Il convient de noter qu'il est préférable de prévoir un condensateur identique pour chaque amplificateur de façon à garder la symétrie des premier et deuxième amplificateurs de puissance équilibrés.

La figure 4 illustre un exemple d'un autre circuit de contrôle CC2 destiné à être incorporé dans les moyens de contrôle 22.

Le circuit CC2 comporte une série de condensateurs 27 de capacité non-variable couplés entre une première borne 28 et une deuxième borne 29 via respectivement une paire de transistors de contrôle 30.

Les bornes 28 et 29 de ce circuit de contrôle CC2 peuvent être couplées par exemple aux première et deuxième bornes d'entrée IN1 et IN2 du diviseur de puissance 13 ou aux premières bornes d'entrée IN1 et de sortie OUT1 du diviseur de puissance 13.

Un premier signal de contrôle SC1 est couplé aux grilles d'une première paire P1 de transistors de contrôle 30 de façon à modifier l'impédance entre les première et deuxième bornes 28 et 29 en rendant actif ou inopérant le condensateur correspondant.

Un deuxième signal de contrôle SC2 est couplé aux grilles de deuxième et troisième paires P2 et P3 de transistors de contrôle 30 de façon à modifier l'impédance entre les première et deuxième bornes 28 et 29 en rendant actifs ou inopérants les condensateurs correspondants.

De la même façon, un troisième signal de contrôle SC3 est couplé aux grilles de quatrième, cinquième, sixième, et septième paires P4 à P7 de transistors de contrôle 30 de façon à modifier l'impédance entre les première et deuxième bornes 28 et 29 en contrôlant l'état passant ou bloqué des condensateurs correspondant lorsque la première condition est remplie.

De ce fait, on peut modifier de façon plus ou moins fine l'impédance entre les première et deuxième bornes 28 et 29 en contrôlant sélectivement les trois signaux de contrôle SC1 à SC3.

## Revendications

1. Procédé de contrôle de l'adaptation d'une antenne (3) à un chemin de transmission (2), ledit chemin de transmission (2) comportant un étage amplificateur (4) couplé en entrée ou en sortie à l'antenne (3) et à une charge résistive (16), le procédé comprenant une phase de contrôle (PC) comportant
une mesure d'une première température courante (Tc1) au niveau ou à proximité de l'antenne (3) et d'une deuxième température courante (Tc2) au niveau ou à proximité de la charge résistive (16),
un déclenchement d'une adaptation de l'impédance vue en entrée ou en sortie de l'étage amplificateur (4) en présence d'une première condition faisant intervenir au moins les première et deuxième températures courantes (Tc1, Tc2), et puis
un arrêt de l'adaptation de l'impédance en présence d'une deuxième condition faisant intervenir au moins la deuxième température courante (Tc2).

2. Procédé selon la revendication 1, comprenant en outre une phase d'étalonnage (PE) préalable à la phase de contrôle (PC) et comportant
un remplacement de l'antenne (3) par une impédance de référence et un placement de l'étage amplificateur (4) dans un état de fonctionnement,
une définition de températures de référence de chemin (Tlr) contenue dans une plage de températures de référence de chemin,
et pour chaque température de référence de chemin (Tlr),
une mesure d'une première température de référence (Tr1) au niveau de l'impédance de référence, et
une mesure d'une deuxième température de référence (Tr2) au niveau de la charge résistive (16).

3. Procédé selon la revendication 2, dans lequel la phase de contrôle (PC) comprend
une mesure (STP1C) d'une température courante de chemin (Tlc1) du chemin de transmission (2),
une première comparaison (STP3C) entre la deuxième température courante (Tc2) et la deuxième température de référence (Tr2) associée à une température de référence de chemin correspondant à ladite température courante de chemin (Tlr), et
une deuxième comparaison (STP4C) entre la première température (Tc1) et la première température de référence (Tr1) associée à une température de référence de chemin correspondant à ladite température courante de chemin (Tlr),
la première condition étant remplie
si la première température courante (Tc1) est inférieure ou égale à la première température de référence (Tr1) augmentée d'un premier seuil (S1), et
si la deuxième température courante (Tc2) est supérieure à la deuxième température de référence (Tr2) augmentée d'un deuxième seuil (S2).

4. Procédé selon la revendication 2, dans lequel la phase de contrôle (PC) comprend
une première mesure (STP1C) d'une première température courante de chemin (Tlc1) du chemin de transmission (2),
une première comparaison (STP3C) entre la deuxième température courante (Tc2) et la deuxième température de référence (Tr2) associée à une température de référence de chemin correspondant à ladite première température courante de chemin (Tlc1),
une deuxième comparaison (STP4C) entre la première température courante (Tc1) et la première température de référence (Tr1) associée à une température de référence de chemin correspondant à ladite première température courante de chemin (Tlr1),
une deuxième mesure (STP5C), à l'issue de la deuxième comparaison (STP4C), d'une deuxième température courante de chemin (Tlc2) du chemin de transmission (2), et
une troisième comparaison (STP6C) entre les première et deuxième températures courantes de chemin (Tlc1, Tlc2),
la première condition étant remplie
si la première température courante (Tc1) est supérieure à la première température de référence (Tr1) augmentée d'un premier seuil (S1), et
si la deuxième température courante (Tc2) est supérieure à la deuxième température de référence (Tr2) augmentée d'un deuxième seuil (S2), et
si la deuxième température courante de chemin (Tlc2) est inférieure ou égale à la première température courante de chemin (Tlc1).

5. Procédé selon la revendication 2, dans lequel la phase de contrôle comprend
une première mesure (STP1C) d'une première température courante de chemin (Tlc1) du chemin de transmission (2),
une première comparaison (STP3C) entre la deuxième température courante (Tc2) et la deuxième température de référence (Tr2) associée à une température de référence de chemin correspondant à ladite première température courante de chemin (Tlc1),
une deuxième comparaison (STP4C) entre la première température courante (Tc1) et la première température de référence (Tr1) associée à une température de référence de chemin correspondant à ladite première température courante de chemin (Tlr1),
une deuxième mesure (STP5C), à l'issue de la deuxième comparaison (STP4C), d'une deuxième température courante de chemin (Tlc2) du chemin de transmission (2),
une troisième comparaison (STP6C) entre les première et deuxième températures courantes de chemin (Tlc1, Tlc2), et
une quatrième comparaison (STP7C), à l'issue de la troisième comparaison (STP6C), entre une différence courante (DC) entre les première et deuxième températures courantes (Tc1, Tc2) et une différence de référence (DR) entre la première température de référence (Tr1) augmentée d'un premier seuil (S1) et la deuxième température de référence (Tr2) augmentée d'un deuxième seuil (S2),
la première condition étant remplie
si la première température courante (Tc1) est supérieure à la première température de référence (Tr1) augmentée d'un premier seuil (S1), et
si la deuxième température courante (Tc2) est supérieure à la deuxième température de référence (Tr2) augmentée d'un deuxième seuil (S2), et
si la deuxième température courante de chemin (Tlc2) est supérieure à la première température courante de chemin (Tlc1), et
si la différence courante (DC) est inférieure ou égale à la différence de référence (DR).

6. Procédé selon la revendication 5, dans lequel la deuxième condition est remplie
si la première température courante (Tc1) est supérieure à la première température de référence (Tr1) augmentée du premier seuil (S1), et
si la deuxième température courante (Tc2) est supérieure à la deuxième température de référence (Tr2) augmentée du deuxième seuil (S2), et
si la deuxième température courante de chemin (Tlr2) est supérieure à la première température courante de chemin (Tlr1), et
si la différence courante (DC) est supérieure à la différence de référence (DR).

7. Procédé selon l'une quelconque des revendications 3 à 6, dans lequel la deuxième condition est remplie
si la deuxième température courante (Tc2) est inférieure ou égale à la deuxième température de référence (Tr2) augmentée du deuxième seuil (S2).

8. Procédé selon l'une quelconque des revendications 3 à 7, dans lequel les premier et deuxième seuils (S1, S2) sont égaux.

9. Dispositif électronique, comprenant une antenne (3), et
un chemin de transmission (2), le chemin de transmission (2) comportant
un étage amplificateur(4) couplé en entrée ou en sortie à l'antenne (3) et à une charge résistive (16),
un premier capteur de température (17) disposé à proximité de l'antenne (3) et configuré pour mesurer une première température courante (Tc1),
un deuxième capteur de température (18) disposé à proximité de la charge résistive (16) et configuré pour mesure une deuxième température courante (Tc2), le dispositif électronique comportant
des moyens de traitement (20) configurés pour déclencher une adaptation de l'impédance vue en entrée ou en sortie de l'étage amplificateur (4) en présence d'une première condition faisant intervenir au moins les première et deuxième températures courantes (Tc1, Tc2) puis pour arrêter l'adaptation de l'impédance en présence d'une deuxième condition faisant intervenir au moins la deuxième température courante (Tc2).

10. Dispositif selon la revendication 9, comprenant en outre des moyens de mémoire (23) configurés pour stocker des températures de référence de chemin (Tlr) contenues dans une plage de températures de référence de chemin (Tlr) et pour chaque température de référence de chemin (Tlr), une première température de référence (Tr1) mesurée au niveau d'une impédance de référence à la place de l'antenne (3) et une deuxième température de référence (Tr2) mesurée au niveau de la charge résistive (16), avec un étage amplificateur (4) en état de fonctionnement.

11. Dispositif selon la revendication 10, comprenant en outre un troisième capteur de température (19) configuré pour effectuer une première mesure (STP1C) d'une première température courante de chemin (Tlc1) du chemin de transmission (2),
les moyens de traitement (20) comportant des moyens de comparaison (21) configurés pour effectuer
une première comparaison (STP3C) entre la deuxième température courante (Tc2) et la deuxième température de référence (Tr2) associée à une température de référence de chemin (Tlr) correspondant à la première température courante de chemin (Tlc1), et
une deuxième comparaison (STP4C) entre la première température courante (Tc1) et la première température de référence (Tr1) associée à ladite température de référence de chemin (Tlr),
et la première condition étant remplie
si la première température courante (Tc1) est inférieure ou égale à la première température de référence (Tr1) augmentée d'un premier seuil (S1), et
si la deuxième température courante (Tc2) est supérieure à la deuxième température de référence (Tr2) augmentée d'un deuxième seuil (S2).

12. Dispositif selon la revendication 10, comprenant en outre un troisième capteur de température (19) configuré pour effectuer une première mesure (STP1C) d'une première température courante de chemin (Tlc1) du chemin de transmission (2),
les moyens de traitement (20) comportant des moyens de comparaison (21) configurés pour effectuer
une première comparaison (STP3C) entre la deuxième température courante (Tc2) et la deuxième température de référence (T) associée à une température de référence de chemin (Tlr) correspondant à la première température courante de la ligne (Tlc1), et
une deuxième comparaison (STP4C) entre la première température courante (Tc1) et la première température de référence (Tr1) associée à ladite température de référence de chemin (Tlr),
le troisième capteur (19) étant en outre configuré pour effectuer une deuxième mesure (STP5C), à l'issue de la deuxième comparaison (STP4C), d'une deuxième température courante de chemin (Tlc2) du chemin de transmission (2), et
les moyens de comparaison (21) étant en outre configurés pour effectuer une troisième comparaison (STP6C) entre les première et deuxième températures courantes de chemin (Tlc1, Tlc2), et
la première condition est remplie
si la première température courante (Tc1) est supérieure à la première température de référence (Tr1) augmentée d'un premier seuil (S1), et
si la deuxième température courante (Tc2) est supérieure à la deuxième température de référence (Tr2) augmentée d'un deuxième seuil (S2), et
si la deuxième température courante de la ligne (Tlc2) est inférieure ou égale à la première température courante de chemin (Tlc1).

13. Dispositif selon la revendication 10, comprenant en outre un troisième capteur de température (19) configuré pour effectuer une première mesure (STP1C) d'une première température courante de chemin (Tlc1) du chemin de transmission (2),
les moyens de traitement (20) comportant des moyens de comparaison (21) configurés pour effectuer
une première comparaison (STP3C) entre la deuxième température courante (Tc2) et la deuxième température de référence (T) associée à une température de référence de chemin (Tlr) correspondant à la première température courante de la ligne (Tlc1), et
une deuxième comparaison (STP4C) entre la première température courante (Tc1) et la première température de référence (Tr1) associée à ladite température de référence de chemin (Tlr),
le troisième capteur (19) étant en outre configuré pour effectuer une deuxième mesure (STP5C), à l'issue de la deuxième comparaison (STP4C), d'une deuxième température courante de chemin (Tlc2) du chemin de transmission (2), et
les moyens de comparaison (21) étant en outre configurés pour effectuer
une troisième comparaison (STP6C) entre les première et deuxième températures courantes de chemin (Tlc1, Tlc2), et
une quatrième comparaison (STP7C), à l'issue de la troisième comparaison (STP6C), entre une différence courante (DC) entre les première et deuxième températures courantes (Tc1, Tc2) et une différence de référence (DR) entre la première température de référence (Tr1) augmentée d'un premier seuil (S1) et la deuxième température de référence (Tr2) augmentée d'un deuxième seuil (S2), et
la première condition est remplie
si la première température courante (Tc1) est supérieure à la première température de référence (Tr1) augmentée du premier seuil (S1), et
si la deuxième température courante (Tc2) est supérieure à la deuxième température de référence (Tr2) augmentée du deuxième seuil (S2), et
si la deuxième température courante de chemin (Tlc2) est supérieure à la première température courante de chemin (Tlc1), et
si la différence courante (DC) est inférieure ou égale à la différence de référence (DR).

14. Dispositif selon la revendication 13, dans lequel la deuxième condition est remplie
si la deuxième température courante (Tc2) est supérieure à la deuxième température de référence (Tr2) augmentée du deuxième seuil (S2), et
si la première température courante (Tc1) est supérieure à la première température de référence (Tr1) augmentée du premier seuil (S1), et
si la deuxième température courante de chemin (Tlc2) est supérieure à la première température courante de chemin (Tlc1), et
si la différence courante (DC) est supérieure à la différence de référence (DR).

15. Dispositif selon l'une quelconques des revendications 11 à 14, dans lequel la deuxième condition est remplie
si la deuxième température courante (Tc2) est inférieure ou égale à la deuxième température de référence (Tr2) augmentée du deuxième seuil (S2).

16. Dispositif selon l'une quelconques des revendications 11 à 15, dans lequel dans lequel les premier et deuxième seuils (S1, S2) sont identique.

17. Dispositif selon l'une quelconque des revendications 9 à 16, dans lequel le chemin de transmission (2) comprend en outre une premier étage de couplage (7) comportant un diviseur de puissance 90° (9) et un deuxième étage de couplage (8) comportant un combineur de puissance 90° (13) dont les première et deuxième bornes d'entrée ou de sortie (OUT1, OUT2) sont respectivement couplées à l'antenne (3) et à la charge résistive (16), l'étage amplificateur (4) comportant deux amplificateurs de puissance (5, 6) équilibrés couplés en parallèle entre les premier et deuxième étages de couplage (7, 8).

18. Dispositif selon la revendication 17 en combinaison avec l'une quelconque revendications 11 à 16, dans lequel les moyens de traitement (20) comprennent en outre des moyens de contrôle (22) couplés entre la sortie des moyens de comparaison (21), et les entrées ou les sorties (14, 15) de l'étage amplificateur (4) et les entrées (IN1) et les sorties (OUT1) du deuxième étage de couplage (8) et configurés pour contrôler l'impédance vue en entrée ou en sortie de l'étage amplificateur (4) en fonction du résultat des première, deuxième, troisième et quatrième comparaisons (STP3C, STP4C, STP6C, STP7C).

19. Dispositif selon la revendication 17 ou 18, dans lequel la distance entre les première et deuxième bornes d'entrée ou de sortie (OUT1, OUT2) du deuxième étage de couplage (8) est supérieure à 100 µm.

20. Dispositif selon l'une quelconque des revendications 9 à 19, réalisé de façon intégrée.

21. Appareil de communication (AC) sans fil incorporant au moins un dispositif (1) selon l'une quelconque des revendications 9 à 20.

## Patentansprüche

1. Verfahren zur Steuerung der Abstimmung einer Antenne (3) auf einen Übertragungsweg (2), wobei der Übertragungsweg (2) eine Verstärkerstufe (4) aufweist, die am Eingang oder am Ausgang mit der Antenne (3) und mit einer Widerstandslast (16) verbunden ist, wobei das Verfahren eine Steuerphase (PC) umfasst, aufweisend
eine Messung einer ersten laufenden Temperatur (Tc1) im Bereich oder in der Nähe der Antenne (3) und einer zweiten laufenden Temperatur (Tc2) im Bereich oder in der Nähe der Widerstandslast (16),
einen Start einer Abstimmung der am Eingang oder am Ausgang der Verstärkerstufe (4) gesehene Impedanz bei Vorliegen einer ersten Bedingung, unter Einbeziehung von mindestens der ersten und zweiten laufenden Temperatur (Tc1, Tc2), und dann
einen Stopp der Abstimmung der Impedanz bei Vorliegen einer zweiten Bedingung, unter Einbeziehung von mindestens der zweiten laufenden Temperatur (Tc2).

2. Verfahren nach Anspruch 1, umfassend ferner eine Eichphase (PE) vor der Steuerungsphase (PC) und aufweisend
einen Ersatz der Antenne (3) durch eine Referenzimpedanz und ein Versetzen der Verstärkerstufe (4) in einen Betriebszustand,
eine Definition von Referenz-Wegtemperaturen (Tlr) in einem Referenz-Wegtemperaturbereich,
und für jede Referenz-Wegtemperatur (Tlr),
eine Messung einer ersten Referenztemperatur (Tr1) im Bereich der Referenzimpedanz, und
eine Messung einer zweiten Referenztemperatur (Tr2) im Bereich der Widerstandslast (16).

3. Verfahren nach Anspruch 2, wobei die Steuerungsphase (PC) umfasst
eine Messung (STP1C) einer laufenden Wegtemperatur (Tlc1) des Übertragungswegs (2),
einen ersten Vergleich (STP3C) zwischen der zweiten laufenden Temperatur (Tc2) und der zweiten Referenztemperatur (Tr2), die einer Referenz-Wegtemperatur zugeordnet ist, die der laufenden Wegtemperatur (Tlr) entspricht, und
einen zweiten Vergleich (STP4C) zwischen der ersten Temperatur (Tc1) und der ersten Referenztemperatur (Tr1), die einer Referenz-Wegtemperatur zugeordnet ist, die der laufenden Wegtemperatur (Tlr) entspricht,
wobei die erste Bedingung erfüllt ist,
wenn die erste laufende Temperatur (Tc1) niedriger als die oder gleich der ersten Referenztemperatur (Tr1) ist, erhöht um einen ersten Grenzwert (S1), und
wenn die zweite laufende Temperatur (Tc2) höher als die zweite Referenztemperatur (Tr2) ist, erhöht um einen zweiten Grenzwert (S2).

4. Verfahren nach Anspruch 2, wobei die Steuerungsphase (PC) umfasst
eine erste Messung (STP1C) einer ersten laufenden Wegtemperatur (Tlc1) des Übertragungswegs (2),
einen ersten Vergleich (STP3C) zwischen der zweiten laufenden Temperatur (Tc2) und der zweiten Referenztemperatur (Tr2), die einer Referenz-Wegtemperatur zugeordnet ist, die der ersten laufenden Wegtemperatur (Tlc1) entspricht,
einen zweiten Vergleich (STP4C) zwischen der ersten laufenden Temperatur (Tc1) und der ersten Referenztemperatur (Tr1), die einer Referenz-Wegtemperatur zugeordnet ist, die der ersten laufenden Wegtemperatur (Tlr1) entspricht,
eine zweite Messung (STP5C), nach Abschluss des zweiten Vergleichs (STP4C), einer zweiten laufenden Wegtemperatur (Tlc2) des Übertragungswegs (2), und
einen dritten Vergleich (STP6C) zwischen der ersten und zweiten laufenden Wegtemperatur (Tlc1, Tlc2),
wobei die erste Bedingung erfüllt ist,
wenn die erste laufende Temperatur (Tc1) höher als die erste Referenztemperatur (Tr1) ist, erhöht um einen ersten Grenzwert (S1), und
wenn die zweite laufende Temperatur (Tc2) höher als die zweite Referenztemperatur (Tr2) ist, erhöht um einen zweiten Grenzwert (S2), und
wenn die zweite laufende Wegtemperatur (Tlc2) niedriger als die oder gleich der ersten laufenden Wegtemperatur (Tlc1) ist.

5. Verfahren nach Anspruch 2, wobei die Steuerungsphase umfasst
eine erste Messung (STP1C) einer ersten laufenden Wegtemperatur (Tlc1) des Übertragungswegs (2),
einen ersten Vergleich (STP3C) zwischen der zweiten laufenden Temperatur (Tc2) und der zweiten Referenztemperatur (Tr2), die einer Referenz-Wegtemperatur zugeordnet ist, die der ersten laufenden Wegtemperatur (Tlc1) entspricht,
einen zweiten Vergleich (STP4C) zwischen der ersten laufenden Temperatur (Tc1) und der ersten Referenztemperatur (Tr1), die einer Referenz-Wegtemperatur zugeordnet ist, die der ersten laufenden Wegtemperatur (Tlr1) entspricht,
eine zweite Messung (STP5C), nach Abschluss des zweiten Vergleichs (STP4C), einer zweiten laufenden Wegtemperatur (Tlc2) des Übertragungswegs (2),
einen dritten Vergleich (STP6C) zwischen der ersten und zweiten laufenden Wegtemperatur (Tlc1, Tlc2), und
einen vierten Vergleich (STP7C), nach Abschluss des dritten Vergleichs (STP6C), zwischen einer laufenden Differenz (DC) zwischen der ersten und zweiten laufenden Temperatur (Tc1, Tc2) und einer Referenzdifferenz (DR) zwischen der ersten Referenztemperatur (Tr1), erhöht um einen ersten Grenzwert (S1), und der zweiten Referenztemperatur (Tr2), erhöht um einen zweiten Grenzwert (S2),
wobei die erste Bedingung erfüllt ist,
wenn die erste laufende Temperatur (Tc1) höher als die erste Referenztemperatur (Tr1) ist, erhöht um einen ersten Grenzwert (S1), und
wenn die zweite laufende Temperatur (Tc2) höher als die zweite Referenztemperatur (Tr2) ist, erhöht um einen zweiten Grenzwert (S2), und
wenn die zweite laufende Wegtemperatur (Tlc2) höher als die erste laufende Wegtemperatur (Tlc1) ist, und
wenn die laufende Differenz (DC) kleiner als die oder gleich der Referenzdifferenz (DR) ist.

6. Verfahren nach Anspruch 5, wobei die zweite Bedingung erfüllt ist,
wenn die erste laufende Temperatur (Tc1) höher als die erste Referenztemperatur (Tr1) ist, erhöht um den ersten Grenzwert (S1), und
wenn die zweite laufende Temperatur (Tc2) höher als die zweite Referenztemperatur (Tr2) ist, erhöht um den zweiten Grenzwert (S2), und
wenn die zweite laufende Wegtemperatur (Tlr2) höher als die erste laufende Wegtemperatur (Tlr1) ist, und
wenn die laufende Differenz (DC) größer als die Referenzdifferenz (DR) ist.

7. Verfahren nach einem der Ansprüche 3 bis 6, wobei die zweite Bedingung erfüllt ist,
wenn die zweite laufende Temperatur (Tc2) kleiner als die oder gleich der zweiten Referenztemperatur (Tr2) ist, erhöht um den zweiten Grenzwert (S2).

8. Verfahren nach einem der Ansprüche 3 bis 7, wobei der erste und zweite Grenzwert (S1, S2) gleich sind.

9. Elektronische Vorrichtung, umfassend eine Antenne (3), und
einen Übertragungsweg (2), wobei der Übertragungsweg (2) aufweist
eine Verstärkerstufe (4), die am Eingang oder am Ausgang mit der Antenne (3) und mit einer Widerstandslast (16) verbunden ist,
einen ersten Temperatursensor (17), der in der Nähe der Antenne (3) angeordnet ist und ausgelegt, um eine erste laufende Temperatur (Tc1) zu messen,
einen zweiten Temperatursensor (18), der in der Nähe der Widerstandslast (16) angeordnet ist und ausgelegt, um eine zweite laufende Temperatur (Tc2) zu messen, wobei die elektronische Vorrichtung aufweist
Verarbeitungsmittel (20), die ausgelegt sind, um eine Abstimmung der am Eingang oder am Ausgang der Verstärkerstufe (4) gesehene Impedanz bei Vorliegen einer ersten Bedingung unter Einbeziehung von mindestens der ersten und zweiten laufenden Temperatur (Tc1, Tc2) zu starten, dann, um die Abstimmung der Impedanz bei Vorliegen einer zweiten Bedingung unter Einbeziehung von mindestens der zweiten laufenden Temperatur (Tc2) zu stoppen.

10. Vorrichtung nach Anspruch 9, umfassend ferner Speichermittel (23), die ausgelegt sind, um Referenz-Wegtemperaturen (Tlr) zu speichern, die in einem Bereich der Referenz-Wegtemperaturen (Tlr) enthalten sind, und für jede Referenz-Wegtemperatur (Tlr) eine erste Referenztemperatur (Tr1), gemessen im Bereich einer Referenzimpedanz an der Stelle der Antenne (3), und eine zweite Referenztemperatur (Tr2), gemessen im Bereich der Widerstandslast (16), mit einer Verstärkerstufe (4) im Betriebszustand.

11. Vorrichtung nach Anspruch 10, umfassend ferner einen dritten Temperatursensor (19), der ausgelegt ist, um eine erste Messung (STP1C) einer ersten laufenden Wegtemperatur (Tlc1) des Übertragungswegs (2) durchzuführen,
wobei die Verarbeitungsmittel (20) Vergleichsmittel (21) aufweisen, die ausgelegt sind, um durchzuführen
einen ersten Vergleich (STP3C) zwischen der zweiten laufenden Temperatur (Tc2) und der zweiten Referenztemperatur (Tr2), die einer Referenz-Wegtemperatur (Tlr) zugeordnet ist, die der ersten laufenden Wegtemperatur (Tlc1) entspricht, und
einen zweiten Vergleich (STP4C) zwischen der ersten laufenden Temperatur (Tc1) und der ersten Referenztemperatur (Tr1), die der Referenz-Wegtemperatur (Tlr) zugeordnet ist,
und wobei die erste Bedingung erfüllt ist,
wenn die erste laufende Temperatur (Tc1) kleiner als die oder gleich der ersten Referenztemperatur (Tr1) ist, erhöht um einen ersten Grenzwert (S1), und
wenn die zweite laufende Temperatur (Tc2) höher als die zweite Referenztemperatur (Tr2) ist, erhöht um einen zweiten Grenzwert (S2).

12. Vorrichtung nach Anspruch 10, umfassend ferner einen dritten Temperatursensor (19), der ausgelegt ist, um eine erste Messung (STP1C) einer ersten laufenden Wegtemperatur (Tlc1) des Übertragungswegs (2) durchzuführen,
wobei die Verarbeitungsmittel (20) Vergleichsmittel (21) aufweisen, die ausgelegt sind, um durchzuführen
einen ersten Vergleich (STP3C) zwischen der zweiten laufenden Temperatur (Tc2) und der zweiten Referenztemperatur (T), die einer Referenz-Wegtemperatur (Tlr) zugeordnet ist, die der ersten laufenden Temperatur der Leitung (Tlc1) entspricht, und
einen zweiten Vergleich (STP4C) zwischen der ersten laufenden Temperatur (Tc1) und der erste Referenztemperatur (Tr1), die der Referenz-Wegtemperatur (Tlr) zugeordnet ist,
wobei der dritte Sensor (19) ferner ausgelegt ist, um nach Abschluss des zweiten Vergleichs (STP4C) eine zweite Messung (STP5C) einer zweiten laufenden Wegtemperatur (Tlc2) des Übertragungswegs (2) durchzuführen, und
die Vergleichsmittel (21) ferner ausgelegt sind, um einen dritten Vergleich (STP6C) zwischen der ersten und zweiten laufenden Wegtemperatur (Tlc1, Tlc2) durchzuführen, und
die erste Bedingung erfüllt ist,
wenn die erste laufende Temperatur (Tc1) höher als die erste Referenztemperatur (Tr1) ist, erhöht um einen ersten Grenzwert (S1), und
wenn die zweite laufende Temperatur (Tc2) höher als die zweite Referenztemperatur (Tr2) ist, erhöht um einen zweiten Grenzwert (S2), und
wenn die zweite laufende Temperatur der Leitung (Tlc2) niedriger als die oder gleich der ersten laufenden Wegtemperatur (Tlc1) ist.

13. Vorrichtung nach Anspruch 10, umfassend ferner
einen dritten Temperatursensor (19), der ausgelegt ist, um eine erste Messung (STP1C) einer ersten laufenden Wegtemperatur (Tlc1) des Übertragungswegs (2) durchzuführen,
wobei die Verarbeitungsmittel (20) Vergleichsmittel (21) aufweisen, die ausgelegt sind, um durchzuführen
einen ersten Vergleich (STP3C) zwischen der zweiten laufenden Temperatur (Tc2) und der zweiten Referenztemperatur (T), die einer Referenz-Wegtemperatur (Tlr) zugeordnet ist, die der ersten laufenden Temperatur der Leitung (Tlc1) entspricht, und
einen zweiten Vergleich (STP4C) zwischen der ersten laufenden Temperatur (Tc1) und der erste Referenztemperatur (Tr1), die der Referenz-Wegtemperatur (Tlr) zugeordnet ist,
wobei der dritte Sensor (19) ferner ausgelegt ist, um nach Abschluss des zweiten Vergleichs (STP4C) eine zweite Messung (STP5C) einer zweiten laufenden Wegtemperatur (Tlc2) des Übertragungswegs (2) durchzuführen, und
die Vergleichsmittel (21) ferner ausgelegt sind, um durchzuführen
einen dritten Vergleich (STP6C) zwischen der ersten und zweiten laufenden Wegtemperatur (Tlc1, Tlc2), und
einen vierten Vergleich (STP7C), nach Abschluss des dritten Vergleichs (STP6C), zwischen einer laufenden Differenz (DC) zwischen der ersten und zweiten laufenden Temperatur (Tc1, Tc2) und einer Referenzdifferenz (DR) zwischen der ersten Referenztemperatur (Tr1), erhöht um einen ersten Grenzwert (S1), und der zweiten Referenztemperatur (Tr2), erhöht um einen zweiten Grenzwert (S2), und
die erste Bedingung erfüllt ist,
wenn die erste laufende Temperatur (Tc1) höher als die erste Referenztemperatur (Tr1) ist, erhöht um den ersten Grenzwert (S1), und
wenn die zweite laufende Temperatur (Tc2) höher als die zweite Referenztemperatur (Tr2) ist, erhöht um den zweiten Grenzwert (S2), und
wenn die zweite laufende Wegtemperatur (Tlc2) höher als die erste laufende Wegtemperatur (Tlc1) ist, und
wenn die laufende Differenz (DC) kleiner als die oder gleich der Referenzdifferenz (DR) ist.

14. Vorrichtung nach Anspruch 13, wobei die zweite Bedingung erfüllt ist,
wenn die zweite laufende Temperatur (Tc2) höher als die zweite Referenztemperatur (Tr2) ist, erhöht um den zweiten Grenzwert (S2), und
wenn die erste laufende Temperatur (Tc1) höher als die erste Referenztemperatur (Tr1) ist, erhöht um den ersten Grenzwert (S1), und
wenn die zweite laufende Wegtemperatur (Tlc2) höher als die erste laufende Wegtemperatur (Tlc1) ist, und
wenn die laufende Differenz (DC) größer als die Referenzdifferenz (DR) ist.

15. Vorrichtung nach einem der Ansprüche 11 bis 14, wobei die zweite Bedingung erfüllt ist,
wenn die zweite laufende Temperatur (Tc2) kleiner als die oder gleich der zweiten Referenztemperatur (Tr2) ist, erhöht um den zweiten Grenzwert (S2).

16. Vorrichtung nach einem der Ansprüche 11 bis 15, wobei der erste und zweite Grenzwert (S1, S2) identisch sind.

17. Vorrichtung nach einem der Ansprüche 9 bis 16, wobei der Übertragungsweg (2) ferner eine erste Kopplungsstufe (7) umfasst, die einen Leistungsteiler 90° (9) aufweist, und eine zweite Kopplungsstufe (8), die einen Leistungskombinierer 90° (13) aufweist, dessen erste und zweite Eingangs- oder Ausgangsklemmen (OUT1, OUT2) jeweils mit der Antenne (3) und mit der Widerstandslast (16) verbunden sind, wobei die Verstärkerstufe (4) zwei ausbalancierte Leistungsverstärker (5, 6) aufweist, die parallel zwischen der ersten und zweiten Kopplungsstufe (7, 8) verbunden sind.

18. Vorrichtung nach Anspruch 17 in Kombination mit einem der Ansprüche 11 bis 16, wobei die Verarbeitungsmittel (20) ferner Steuerungsmittel (22) umfassen, die zwischen dem Ausgang der Vergleichsmittel (21) und den Eingängen oder den Ausgängen (14, 15) der Verstärkerstufe (4) und den Eingängen (IN1) und den Ausgängen (OUT1) der zweiten Kopplungsstufe (8) verbunden sind und ausgelegt, um die am Eingang oder am Ausgang der Verstärkerstufe (4) gesehene Impedanz in Abhängigkeit vom Ergebnis des ersten, zweiten, dritten unFd vierten Vergleichs (STP3C, STP4C, STP6C, STP7C) zu steuern.

19. Vorrichtung nach Anspruch 17 oder 18, wobei der Abstand zwischen der ersten und zweiten Eingangs- oder Ausgangsklemme (OUT1, OUT2) der zweiten Kopplungsstufe (8) größer als 100 µm ist.

20. Vorrichtung nach einem der Ansprüche 9 bis 19, die integriert hergestellt ist.

21. Drahtlose Kommunikationsapparatur (AC), die mindestens eine Vorrichtung (1) nach einem der Ansprüche 9 bis 20 inkorporiert.

## Claims

1. A method for controlling the matching of an antenna (3) to a transmission path (2), said transmission path (2) comprising an amplifier stage (4) coupled at the input or at the output to the antenna (3) and to a resistive load (16), the method comprising a checking phase (PC) comprising
a measurement of a first current temperature (Tc1) at or in proximity to the antenna (3) and of a second current temperature (Tc2) at or in proximity to the resistive load (16),
a triggering of a matching of the impedance seen at the input or at the output of the amplifier stage (4) in the presence of a first condition involving at least the first and second current temperatures (Tc1, Tc2), and then
a stopping of the matching of the impedance in the presence of a second condition involving at least the second current temperature (Tc2).

2. The method as claimed in claim 1, also comprising a calibration phase (PE) prior to the checking phase (PC) and comprising
a replacement of the antenna (3) by a reference impedance and a setting of the amplifier stage (4) in an operating state,
a definition of path reference temperatures (Tlr) contained within a range of path reference temperatures,
and for each path reference temperature (Tlr),
a measurement of a first reference temperature (Tr1) at the reference impedance, and
a measurement of a second reference temperature (Tr2) at the resistive load (16).

3. The method as claimed in claim 2, in which the checking phase (PC) comprises
a measurement (STP1C) of a current path temperature (Tlc1) of the transmission path (2),
a first comparison (STP3C) between the second current temperature (Tc2) and the second reference temperature (Tr2) associated with a path reference temperature corresponding to said current path temperature (Tlr), and
a second comparison (STP4C) between the first temperature (Tc1) and the first reference temperature (Tr1) associated with a path reference temperature corresponding to said current path temperature (Tlr),
the first condition being fulfilled
if the first current temperature (Tc1) is lower than or equal to the first reference temperature (Tr1) augmented by a first threshold (S1), and
if the second current temperature (Tc2) is higher than the second reference temperature (Tr2) augmented by a second threshold (S2).

4. The method as claimed in claim 2, in which the checking phase (PC) comprises
a first measurement (STP1C) of a first current path temperature (Tlc1) of the transmission path (2),
a first comparison (STP3C) between the second current temperature (Tc2) and the second reference temperature (Tr2) associated with a path reference temperature corresponding to said first current path temperature (Tlc1),
a second comparison (STP4C) between the first current temperature (Tc1) and the first reference temperature (Tr1) associated with a path reference temperature corresponding to said first current path temperature (Tlr1),
a second measurement (STP5C), on completion of the second comparison (STP4C), of a second current path temperature (Tlc2) of the transmission path (2), and
a third comparison (STP6C) between the first and second current path temperatures (Tlc1, Tlc2),
the first condition being fulfilled
if the first current temperature (Tc1) is higher than the first reference temperature (Tr1) augmented by a first threshold (S1), and
if the second current temperature (Tc2) is higher than the second reference temperature (Tr2) augmented by a second threshold (S2), and
if the second current path temperature (Tlc2) is lower than or equal to the first current path temperature (Tlc1).

5. The method as claimed in claim 2, in which the checking phase comprises
a first measurement (STP1C) of a first current path temperature (Tlc1) of the transmission path (2),
a first comparison (STP3C) between the second current temperature (Tc2) and the second reference temperature (Tr2) associated with a path reference temperature corresponding to said first current path temperature (Tlc1),
a second comparison (STP4C) between the first current temperature (Tc1) and the first reference temperature (Tr1) associated with a path reference temperature corresponding to said first current path temperature (Tlr1),
a second measurement (STP5C), on completion of the second comparison (STP4C), of a second current path temperature (Tlc2) of the transmission path (2),
a third comparison (STP6C) between the first and second current path temperatures (Tlc1, Tlc2), and
a fourth comparison (STP7C), on completion of the third comparison (STP6C), between a current difference (DC) between the first and second current temperatures (Tc1, Tc2) and a reference difference (DR) between the first reference temperature (Tr1) augmented by a first threshold (S1) and the second reference temperature (Tr2) augmented by a second threshold (S2),
the first condition being fulfilled
if the first current temperature (Tc1) is higher than the first reference temperature (Tr1) augmented by a first threshold (S1), and
if the second current temperature (Tc2) is higher than the second reference temperature (Tr2) augmented by a second threshold (S2), and
if the second current path temperature (Tlc2) is higher than the first current path temperature (Tlc1), and
if the current difference (DC) is lower than or equal to the reference difference (DR).

6. The method as claimed in claim 5, in which the second condition is fulfilled
if the first current temperature (Tc1) is higher than the first reference temperature (Tr1) augmented by the first threshold (S1), and
if the second current temperature (Tc2) is higher than the second reference temperature (Tr2) augmented by the second threshold (S2), and
if the second current path temperature (Tlr2) is higher than the first current path temperature (Tlr1), and
if the current difference (DC) is higher than the reference difference (DR).

7. The method as claimed in any one of claims 3 to 6, in which the second condition is fulfilled
if the second current temperature (Tc2) is lower than or equal to the second reference temperature (Tr2) augmented by the second threshold (S2).

8. The method as claimed in any one of claims 3 to 7, in which the first and second thresholds (S1, S2) are equal.

9. An electronic device, comprising an antenna (3), and
a transmission path (2), the transmission path (2) comprising
an amplifier stage (4) coupled at the input or at the output to the antenna (3) and to a resistive load (16),
a first temperature sensor (17) positioned in proximity to the antenna (3) and configured to measure a first current temperature (Tc1),
a second temperature sensor (18) positioned in proximity to the resistive load (16) and configured to measure a second current temperature (Tc2), the electronic device comprising
processing means (20) configured to trigger a matching of the impedance seen at the input or at the output of the amplifier stage (4) in the presence of a first condition involving at least the first and second current temperatures (Tc1, Tc2) then to stop the matching of the impedance in the presence of a second condition involving at least the second current temperature (Tc2).

10. The device as claimed in claim 9, also comprising memory means (23) configured to store path reference temperatures (Tlr) contained within a range of path reference temperatures (Tlr) and, for each path reference temperature (Tlr), a first reference temperature (Tr1) measured at a reference impedance in the place of the antenna (3) and a second reference temperature (Tr2) measured at the resistive load (16), with an amplifier stage (4) in operating state.

11. The device as claimed in claim 10, also comprising a third temperature sensor (19) configured to perform a first measurement (STP1C) of a first current path temperature (Tlc1) of the transmission path (2),
the processing means (20) comprising comparison means (21) configured to perform
a first comparison (STP3C) between the second current temperature (Tc2) and the second reference temperature (Tr2) associated with a path reference temperature (Tlr) corresponding to the first current path temperature (Tlc1), and
a second comparison (STP4C) between the first current temperature (Tc1) and the first reference temperature (Tr1) associated with said path reference temperature (Tlr),
and the first condition being fulfilled
if the first current temperature (Tc1) is lower than or equal to the first reference temperature (Tr1) augmented by a first threshold (S1), and
if the second current temperature (Tc2) is higher than the second reference temperature (Tr2) augmented by a second threshold (S2).

12. The device as claimed in claim 10, also comprising a third temperature sensor (19) configured to perform a first measurement (STP1C) of a first current path temperature (Tlc1) of the transmission path (2),
the processing means (20) comprising comparison means (21) configured to perform
a first comparison (STP3C) between the second current temperature (Tc2) and the second reference temperature (T) associated with a path reference temperature (Tlr) corresponding to the first current line temperature (Tlc1), and
a second comparison (STP4C) between the first current temperature (Tc1) and the first reference temperature (Tr1) associated with said path reference temperature (Tlr),
the third sensor (19) being also configured to perform a second measurement (STP5C), on completion of the second comparison (STP4C), of a second current path temperature (Tlc2) of the transmission path (2), and
the comparison means (21) being also configured to perform a third comparison (STP6C) between the first and second current path temperatures (Tlc1, Tlc2), and
the first condition is fulfilled
if the first current temperature (Tc1) is higher than the first reference temperature (Tr1) augmented by a first threshold (S1), and
if the second current temperature (Tc2) is higher than the second reference temperature (Tr2) augmented by a second threshold (S2), and
if the second current line temperature (Tlc2) is lower than or equal to the first current path temperature (Tlc1).

13. The device as claimed in claim 10, also comprising
a third temperature sensor (19) configured to perform a first measurement (STP1C) of a first current path temperature (Tlc1) of the transmission path (2),
the processing means (20) comprising comparison means (21) configured to perform
a first comparison (STP3C) between the second current temperature (Tc2) and the second reference temperature (T) associated with a path reference temperature (Tlr) corresponding to the first current line temperature (Tlc1), and
a second comparison (STP4C) between the first current temperature (Tc1) and the first reference temperature (Tr1) associated with said path reference temperature (Tlr),
the third sensor (19) being also configured to perform a second measurement (STP5C), on completion of the second comparison (STP4C), of a second current path temperature (Tlc2) of the transmission path (2), and
the comparison means (21) being also configured to perform
a third comparison (STP6C) between the first and second current path temperatures (Tlc1, Tlc2), and
a fourth comparison (STP7C), on completion of the third comparison (STP6C), between a current difference (DC) between the first and second current temperatures (Tc1, Tc2) and a reference difference (DR) between the first reference temperature (Tr1) augmented by a first threshold (S1) and the second reference temperature (Tr2) augmented by a second threshold (S2), and
the first condition is fulfilled
if the first current temperature (Tc1) is higher than the first reference temperature (Tr1) augmented by the first threshold (S1), and
if the second current temperature (Tc2) is higher than the second reference temperature (Tr2) augmented by the second threshold (S2), and
if the second current path temperature (Tlc2) is higher than the first current path temperature (Tlc1), and
if the current difference (DC) is lower than or equal to the reference difference (DR).

14. The device as claimed in claim 13, in which the second condition is fulfilled
if the second current temperature (Tc2) is higher than the second reference temperature (Tr2) augmented by the second threshold (S2), and
if the first current temperature (Tc1) is higher than the first reference temperature (Tr1) augmented by the first threshold (S1), and
if the second current path temperature (Tlc2) is higher than the first current path temperature (Tlc1), and
if the current difference (DC) is higher than the reference difference (DR).

15. The device as claimed in any one of claims 11 to 14, in which the second condition is fulfilled
if the second current temperature (Tc2) is lower than or equal to the second reference temperature (Tr2) augmented by the second threshold (S2).

16. The device as claimed in any one of claims 11 to 15, in which in which the first and second thresholds (S1, S2) are identical.

17. The device as claimed in any one of claims 9 to 16, in which the transmission path (2) also comprises a first coupl
ing stage (7) comprising a 90° power splitter (9) and a second coupling stage (8) comprising a 90° power combiner (13) of which the first and second input or output terminals (OUT1, OUT2) are respectively coupled to the antenna (3) and to the resistive load (16), the amplifier stage (4) comprising two balanced power amplifiers (5, 6) coupled in parallel between the first and second coupling stages (7, 8).

18. The device as claimed in claim 17 in combination with any one of claims 11 to 16, in which the processing means (20) also comprise control means (22) coupled between the output of the comparison means (21) and the inputs or the outputs (14, 15) of the amplifier stage (4) and the inputs (IN1) and the outputs (OUT1) of the second coupling stage (8) and configured to check the impedance seen at the input or at the output of the amplifier stage (4) as a function of the result of the first, second, third and fourth comparisons (STP3C, STP4C, STP6C, STP7C).

19. The device as claimed in claim 17 or 18, in which the distance between the first and second input or output terminals (OUT1, OUT2) of the second coupling stage (8) is greater than 100 µm.

20. The device as claimed in any one of claims 9 to 19, produced in an integrated manner.

21. A wireless communication unit (AC) incorporating at least one device (1) as claimed in any one of claims 9 to 20.
